Europäisches Patentamt

European Patent Office

Office européen des brevets

(19)

(11) Publication number: 0 093 874
A1

# EUROPEAN PATENT APPLICATION

(21) Application number: 83103291.7

(22) Date of filing: 05.04.83

(51) Int. Cl.³: **B 02 C 23/06,** B 28 B 17/02
// C04B35/00

(30) Priority: 26.04.82 US 371769

(43) Date of publication of application: 16.11.83
**Bulletin 83/46**

(84) Designated Contracting States: **DE FR GB IT**

(71) Applicant: International Business Machines Corporation,
Old Orchard Road, Armonk, N.Y. 10504 (US)

(72) Inventor: Herron, Lester Wynn, 66 Route 6 Dartantra
Drive, Hopewell Junction, NY 12533 (US)
Inventor: Nufer, Robert Wolff, Rd.
No. 3 Box 229 Tamarack Drive, Hopewell Junction,
NY 12533 (US)

(74) Representative: Barth, Carl Otto et al, Rablstrasse 24,
D-8000 München 80 (DE)

(54) **Method for deagglomerating ceramic particles.**

(57) A method for deagglomerating or breaking down ceramic particles is provided. A liquid binder mix is added to the ceramic powder in an amount equal to or a little greater than the void volume of the ceramic powders at the desired final density. A force is applied to the deagglomerated ceramic powder. The densification process proceeds until the liquid binder mix occupies the total void volume of the powder which renders the mixture incompressible, thus halting the deagglomeration process.

ACTORUM AG

## METHOD FOR DEAGGLOMERATING CERAMIC PARTICLES

This invention relates to a method of deagglomerating or breaking down ceramic particles for preparing a ceramic slurry which is cast into a ceramic green sheet, from which multilayer ceramic substrates for packaging large scale integrated circuit devices are produced.

The multilayer ceramic substrate has been used for mounting many highly integrated semiconductor devices and interconnecting these devices into an operative system. The basic process for forming this packaging structure comprises the steps of dry milling the ceramic particles, mixing the ceramic particles in a ball mill with a resin binder and a solvent for the binder to form a ceramic slurry, casting the slurry and drying to produce green sheets, punching holes in and screening conductive lines on the green sheets, laminating the sheets, and sintering. This technology is well known and generally described in U.S. Patents 4 109 377 and 3 899 554.

U.S. Patent 3 358 937 teaches dry ball-milling of alumina particles wherein 0.05-0.5% (by weight) of alcohol is added to the alumina particles to minimize packing of alumina on the walls of the rotating drum and on the grinding media.

In the preparation of a multilayer ceramic slurry for the tape casting of green sheets, small variations in the deagglomeration rate of the ceramic particulate causes the green sheet density of the cast tape to vary over a considerable range. This results in a variable product and a yield loss when the range is wider than that allowed in the specification. The variation between lots of ceramic is so wide that the ball milling cycle times must be modified for

FI 981 054

each lot, and in some instances it may have to be adjusted during the ball milling of one lot of ceramic particulate to center the density in the specified range.

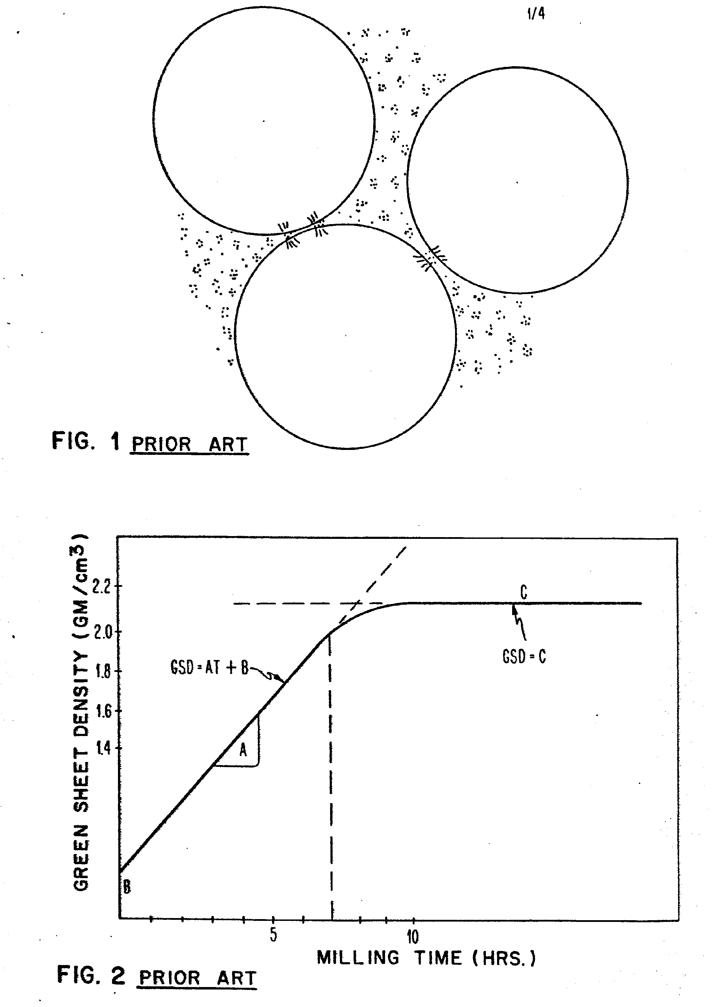

The dispersion of ceramic agglomerates in the prior art slurry process is accomplished by the break down of the agglomerates by the wet milling action. During wet milling, abrasion (impacts) between the grinding media produces high shear stresses in the mill liquid in the region near the contact points which causes the alumina agglomerates to be broken down or dispersed. The rate of the dispersion is limited by the strength of the agglomerates, the magnitude of the shear stress generated, and the possibility of the agglomerate being in the high shear region around the impact points of the media. Due to the limited shear stresses generated and the associated proximity probability, the milling process is inefficient and the rate of deagglomeration is low. This process is illustrated in Figure 1.

Figure 2 shows the relationship between the green sheet density and the milling time of the ceramic particles for forming a final slurry from which the green sheet is cast. The green sheet density (GSD) can be given by the equation

$$GSD = AT + B$$

wherein, A is a coefficient which is a function of viscosity, mill efficiency, and agglomerate strength, and B is a constant determined by milling liquid content, and agglomerate packing density. After a substantial milling time, the ceramic agglomerates become totally deagglomerated. Thus, the GSD curve saturates toward a constant C, which is a function of the single crystal particle size distribution of the ceramic.

FI 981 054

The typical green sheet density required for ceramic packag-. ing is about 90% of green sheet density made of totally deagglomerated ceramic. In the conventional method, the milling time was adjusted to meet the green sheet density specification. Since there are variations in the agglomerate strength and the agglomerate packing density from lot to lot of the ceramic powder, the GSD curve varies from lot to lot. Thus, difficulty has been experienced in adjusting the milling time to meet the GSD specification. Further, the milling time takes seven to eleven hours in a typical milling process.

The invention now intends to solve the above problems by providing a self-limiting method of deagglomerating ceramic particles.

It is a second object of the invention to provide a method of deagglomerating ceramic particles in a relatively short time.

It is a further object of the invention to provide a method of deagglomerating ceramic particles with the ability to automatically control the degree of deagglomeration.

The invention as claimed provides a solution to the above stated objects.

In the following, the invention is described in connection with the appended drawings in which:

Figure 1        illustrates a wet milling mechanism of the
                prior art wherein milling balls or cylinders
                apply shear stress to the ceramic particles.

FI 981 054

Figure 2          shows the relationship between green sheet
                  density and milling time of the prior art wet
                  milling method.

Figures 3A        through 3C show models of ceramic powder at
                  different levels of deagglomeration.

Figure 4          shows the relationship between the green
                  sheet density and the amount of binder mix
                  added according to the present invention.

Figures 5A        illustrates models of ceramic powder
through 5D        at different levels of densification in a
                  cylinder and piston system.

In accordance with the invention, the level of deagglomeration is controlled by the amount of liquid added to the raw
agglomerated ceramic powder. Typical ceramic particles
include alumina, steatite, glass, zircon, aluminum silicate,
zirconium dioxide, titanium dioxide, magnesium silicate,
bismuth stannate, barium titanate, and the like, including
combinations thereof.

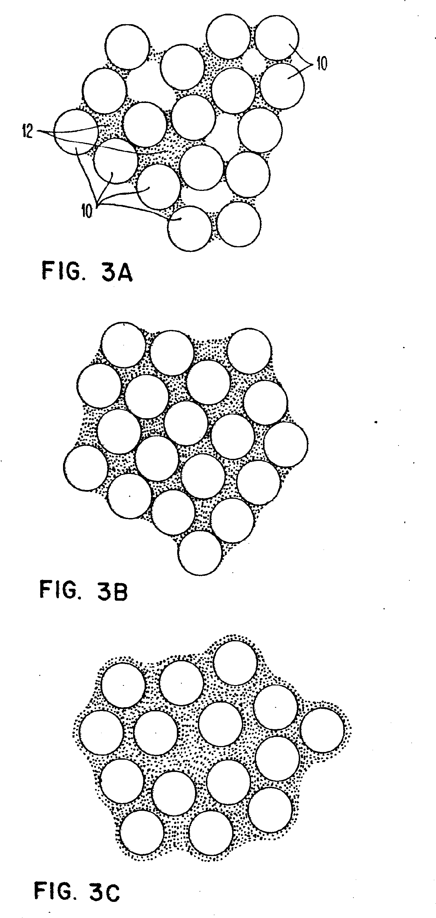

The ceramic powder is put in a container and binder mix
liquid is added to the powder in a volume equal to or a
little greater than the void volume of the ceramic powder at
the final desired density. Figure 3A illustrates a portion
of the resultant mixture. Since the raw ceramic particles
10 are relatively coarse, the binder mix 12 fills a portion
of the considerable space among the ceramic particles 10.
The exact amount of binder mix 12 to be added to the ceramic
particles 10 depends on the method selected to deagglomerate
the powder particles and is determined by experiments as
described hereafter.

FI 981 054

0093874

- 5 -

Sufficient energy is applied to the ceramic powder particles.
to crush them by such means as a mechanical displacement or
compaction of the powder, extrusion, ball milling, motionless mixing or passing an impact shock wave through the powder. As the agglomerates are broken down and ceramic powder
is densified, the space among the particles decreases until
the space is totally filled with the binder mix as illustrated in Figure 3B. When compressive force is used for breaking
down the agglomerates by, for example, pressing down a piston
into a cylinder which contains the ceramic powder including
the added liquid, the process stops at this stage because of
incompressible nature of the liquid. Any further compressive
force will provide a uniform hydrostatic force to the particles which is not effective to generate shear stress to
the particles. When ball milling is used, the ceramic powder
will be further broken down by the shear stress created by
the milling balls or cylinders. As the deagglomeration proceeds and the bulk ceramic powder is further densified, the
amount of added liquid exceeds the void volume between the
raw ceramic powder and deagglomerated ceramic powder thus
causing the ceramic particles to flow or float in the liquid
as illustrated in Figure 3C. At this point, any further application of energy now causes the particles to flow like a
paste rather than being broken, which greatly reduces the
rate of deagglomeration and in effect halts the densification or dispersion process. The ball milling is stopped when
the powder reaches a pasty consistency. After achieving the
desired level of deagglomeration the remaining binder and
other organics are blended to prepare a ceramic slurry for
casting into ceramic green sheets.

The volume of liquid added to the raw or dry ceramic powder
should be equal to or a little greater than the void volume
of the ceramic powder at the final desired density, and

FI 981 054

depends upon the method selected to deagglomerate the powder. The appropriate volume of liquid to be added to the raw ceramic powder can be determined by experimenting with the specific method selected.

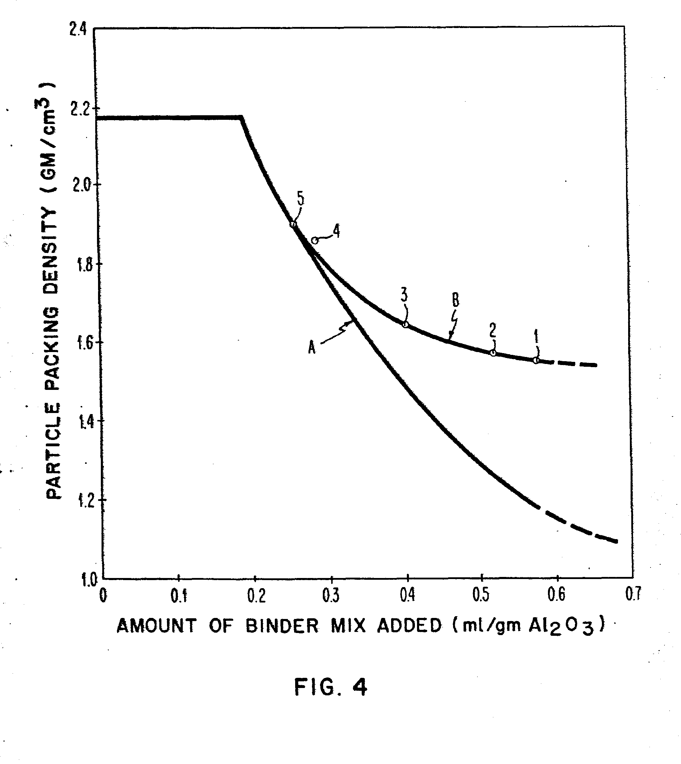

Figure 4 shows the relationship between the particle packing density of the green sheet which is formed after processing according to the present invention and the amount of binder mix liquid added before the deagglomeration process.

Curve A is an ideal curve where the amount of liquid added to the as-received raw alumina is equal to the void volume of the alumina powder at the desired density. The amount of binder mix liquid to be added to the raw alumina powder for obtaining a final particle packing density of 1.20 gm/cm$^3$, for example, can be calculated as follows: Theoretical density, (T.D.) of $Al_2O_3$/frit mixture is 3.72 gm/cm$^3$. Thus, the desired density of 1.20 gm/cm$^3$ is 32.26% of the theoretical density. The void volume between the agglomerated and deagglomerated alumina/frit mixture powder per one gram of $Al_2O_3$/ frit mixture is $(1- \frac{\%T.D.}{100}) \div$ 1.20 gm/cm$^{-3}$ + 0.5645 ml/gm $Al_2O_3$/frit mixture. Since the density of binder mix liquid is 0.816 gm/cm$^3$, the amount of liquid to be added per one gram of $Al_2O_3$/frit mixture is 0.5645 X 0.816 = 0.4606 grams. Similarly, the amount of liquid can be calculated for any desired packing density.

Curve B in Figure 4 is an experimental curve wherein points 1 through 4 were obtained by impacting a 500ml polyethylene bottle containing the ceramic powder with a predetermined amount of binder mix added against the floor 1 to 5 times until the original powder and liquid mix is pasty in appearance. The remaining binder mix is mixed in to make the final slurry. The slurry was cast into a sheet and packing density was measured by determining green sheet density. The data for point 5 was obtained by experimentally using a one liter ball mill with 500 grams of 12,7 mm (0.5 inch) diameter alumina grinding cylinders. The mill was rolled for one hour with the ceramic powder and a predetermined amount of binder mix. After the powder became pasty, the remaining organics were added and milled for 30 minutes to obtain a homogeneous slurry for casting the ceramic green sheets. Table 1 shows the data for this experiment. The alumina powder used is a mixture of a alumina and frit.

The frit typically comprises approximately 52% of $SiO_2$, 30% of $Al_2O_3$, 8.5% of CaO, 8.5% of MgO, and less than 1% of impurities by weight. The binder mix typically comprises approximately 13.1% of Butvar B- 98, (Trademark of Monsanto Company) which is polyvinyl butyral, 3.7% of Benzoflex 9-88 (Trademark of Visicol Chemical Company) which is dipropylene glycol dibenzoate, 20.7% of methanol, and 62.6% of methyl isobutylketone by weight.

## Table 1

| Graph Point | $Al_2O_3$ gm | Frit gm | Binder Mix gm | 2nd Adds Binder Mix gm | Butvar gm |
|---|---|---|---|---|---|
| 1 | 89.0 | 11.0 | 46.88 | 0 | 5.1 |
| 2 | 89.0 | 11.0 | 42.19 | 4.69 | 5.1 |
| 3 | 89.0 | 11.0 | 32.82 | 14.06 | 5.1 |
| 4 | 89.0 | 11.0 | 23.44 | 23.44 | 5.1 |
| 5 | 170.0 | 22.0 | 42.20 | 51.56 | 10.2 |

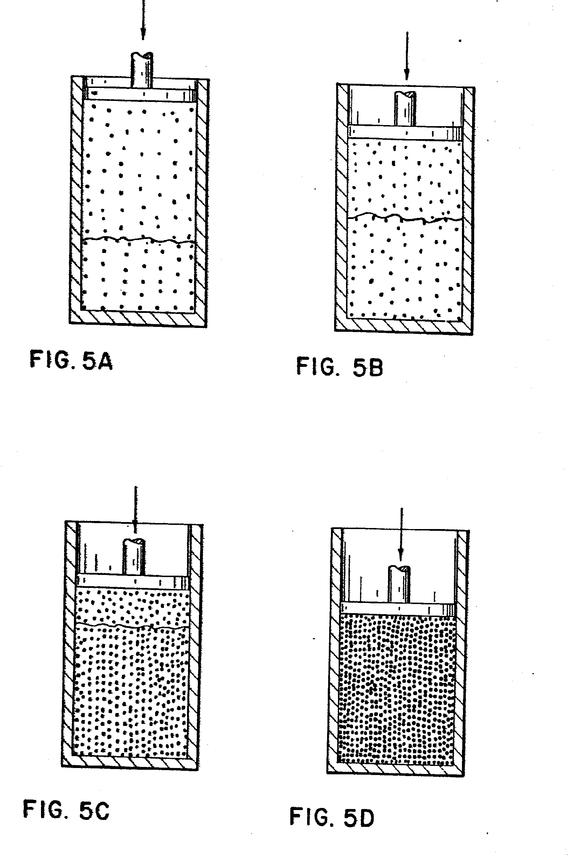

Another mode of carrying out the invention is the following: Ceramic powder such as alumina is put in a cylinder and binder mix is added in a volume which is equal to or a little greater than the void volume of the ceramic powder at

FI 981 054

the desired final density. The optimum amount of the binder mix to be added is determined by experiments, first relying on the ideal curve in Figure 4 and then changing the amount for the desired packing density. The raw ceramic powder is relatively coarse and includes a considerable space among ceramic particles, the binder mix occupies a portion of such space. This is illustrated in Figure 5A. The liquid is situated at the bottom of the cylinder for ease of explanation. In practice it is dispersed throughout the entire matrix.

As the piston is pressed down applying 0,069 to 0,138 GPa (10 to 20 kpsi) to the ceramic powder, the powder is densified, reducing the space between the particles. As the structure is compressed, the void space decreases and more of the space between the particles is filled with the liquid as illustrated in Figures 5B and 5C. This continues until the space is filled as shown in Figure 5D. At this point, downward movement of the piston is halted because of the incompressible nature of the liquid. The ceramic powder is now at the desired level of deagglomeration since the predetermined amount of liquid governs this. Additional binder mix is added to prepare a final slurry for casting into a green sheet.

An extrusion process could also be used to compress the ceramic powder to the desired level of deagglomeration and force it through the extrusion orifice in the form of a paste. To this is added the remaining organics which can be blended together to form the final slurry.

FI 981 054

CLAIMS

1. A method of deagglomerating ceramic powder, characterized by

adding a predetermined amount of liquid to the ceramic powder, said amount being equal to or a little greater than the void volume of the ceramic powder at the desired final density, and

applying a force to densify the ceramic powder until the desired void volume is substantially completely occupied by said liquid, at which time the incompressible nature of liquid halts any further densification.

2. The method of claim 1, wherein said deagglomeration force is a compressive force.

3. The method of claim 2, wherein the gas surrounding the ceramic powder is allowed to exit when the compressive force is applied.

4. The method of claim 2, wherein said deagglomerating compressive force used lies between approximately 0,069 and 0,138 GPa.

5. The method of claim 2, wherein the ceramic powder and the liquid is contained in a cylinder and said compressive force is applied by moving a piston downward along the inner wall of the cylinder.

FI 981 054

6.  The method of claim 5, wherein completion of deagglomeration is determined when downward movement of said piston is halted by the incompressible condition of the mixture at complete void fill.

7.  The method of claim 1, wherein said deagglomeration force is applied by ball milling the mixture of said ceramic powder and said predetermined amount of liquid.

8.  The method of claim 7, wherein the ball milling is terminated when the powder/liquid mixture reaches a pasty consistency.

FI 981 054

FIG. 1 PRIOR ART

FIG. 2 PRIOR ART

FIG. 3A

FIG. 3B

FIG. 3C

0093874

3/4

FIG. 4

FIG. 5A

FIG. 5B

FIG. 5C

FIG. 5D

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,A | US-A-3 358 937  (A. PEARSON et al) <br> * Column 1 * | 1,7 | B 02 C  23/06 <br> B 23 B  17/02 // <br> C 04 B  35/00 |
| A | US-A-3 252 810  (A.V. SOMERS) <br> * Claim 1 * | 1,7 | |
| A | GB-A-1 319 258  (GENERAL MOTORS CORP.) <br> * Claims 8, 9 * | | |
| A | US-A-4 126 422  (L.H. BRANDES) <br><br> *  Claim 1; column 2, lines 25-37 * | | |
| A | GB-A-1 246 182  (CENTRE STEPHANOIS DE RECHERCHES MECANIQUES HYDROMECANIQUE & FROTTEMENT) <br> * Claim 1; figures 3, 4 * | | **TECHNICAL FIELDS SEARCHED (Int. Cl. ³)** <br><br> B 02 C  23/00 <br> B 28 B  17/02 <br> B 28 C   1/00 <br> C 01 F   7/02 <br> C 04 B  35/00 |

The present search report has been drawn up for all claims

| Place of search <br> BERLIN | Date of completion of the search <br> 08-07-1983 | Examiner <br> STROUD  J.G. |
|---|---|---|